# EUROPÄISCHE PATENTSCHRIFT

(11) **EP 0 469 488 B1**
(45) Veröffentlichungstag und Bekanntmachung des Hinweises auf die Patenterteilung: **11.01.1995**
(21) Anmeldenummer: 91112648.0
(22) Anmeldetag: 27.07.1991
(51) Int. Cl.: H02G 3/06

(54) **Kabelverschraubung**
Screw-threaded cable fitting
Fixation de câbles vissée

(30) Priorität: 31.07.1990 DE 4024285; 31.07.1990 DE 4024286
(43) Veröffentlichungstag der Anmeldung: 05.02.1992
(73) Patentinhaber: Holzmann, Hermann, D-70567 Stuttgart (DE)
(72) Erfinder: Holzmann, Hermann, D-70567 Stuttgart (DE)
(74) Vertreter: Otte, Peter, Dipl.-Ing.

(56) Entgegenhaltungen:
- EP-A- 0 322 625
- DE-A- 2 902 174
- DE-A- 3 109 583
- DE-A- 3 535 595

## Beschreibung

### Stand der Technik

Die Erfindung betrifft eine Kabelverschraubung, also eine Verschraubung aus Kunststoff zur Ein- und Durchführung, Halterung, Abdichtung und Zugentlastung von Kabeln, Leitungen oder Schläuchen nach dem Oberbegriff des Anspruchs 1.

Bei einer bekannten Kabelverschraubung dieser Art (DE-PS 34 18 978) ist mindestens eine den Klemmzungenring bildende Klemmzunge so ausgebildet, daß sie bei beim Anziehen der Hutmutter auf den Klemmzungenring ausgeübtem Druck selektiv eine stärkere Annäherung an das eingeführte Kabel erfährt, also verstärkt nach innen gedrückt wird, verglichen mit den im Klemmzungenringverbund verbleibenden anderen Klemmzungen. Dies führt zu einer eckigen oder unrunden Konfiguration des Kabelpreßrunds, wobei die jeweils nach innen wandernden Klemmzungen entweder radial dicker oder höher gestellt sind oder die Schrägschlitzung zwischen aneinander grenzenden Klemmzungen abwechselnd gegenläufig getroffen ist, so daß die jeweils mindestens eine selektive Klemmzunge durch die Druckwirkung der beidseitig angrenzenden Klemmzungen nach innen getrieben wird.

Solche Kabelverschraubungen, deren Klemmzungenringverbund im angezogenen Zustand der Hutmutter innen eine eckige oder unrunde Konfiguration einnimmt, die soweit getrieben werden kann, daß abwechselnd jede zweite Klemmzunge nach innen gedrückt ist, was einer gleichmäßigen Verteilung über den Umfang des Klemmzungenrings entspricht, ergeben eine Vielzahl von Vorteilen, nicht zuletzt auch hinsichtlich der Verdrehsicherheit, die zwischen der Kabelverschraubung und dem eingeführten Kabel erzielt wird, weil durch die eckige oder unrunde Druckwirkung das Kabel eine entsprechende Verformung annimmt und sich auch bei einer normalerweise nur geringfügigen Lockerung einer anfänglichen festen Verschraubung dennoch nicht relativ zur Kabelverschraubung drehen kann. Allerdings sind bei einer solchen Kabelverschraubung mit gegenläufiger Schlitzung der Trennschlitze aneinandergrenzender Klemmzungen keine Maßnahmen getroffen, die auch eine Verdrehsicherung zwischen der fest angezogenen Hutmutter und dem Kabelstutzen und damit den häufig mit ihm einstükkig verbundenen Klemmzungen sicherstellen. Eine solche Verdrehsicherung ist allerdings bei einer weiteren bekannten Kabelverschraubung (DE-PS 26 31 996) vorgesehen, bei der die Klemmzungen durch gleichartig, also in einer Richtung verlaufende Schrägschlitzungen sich teilweise fächerartig übereinander bewegende zahnähnliche Segmente bilden, wenn die Hutmutter angezogen wird.

Dabei ist diese bekannte Kabelverschraubung so aufgebaut wie bei Kabelverschraubungen üblich, umfaßt also einen Zwischen- oder Montagestutzen, der beidseitig Außengewinde aufweist, damit er einerseits an einer Montagefläche oder einer Gehäusetrennwand u. dgl. über ein Anschlußgewinde befestigt werden kann und andererseits die Überwurf- oder Hutmutter auf ihn aufgeschraubt werden kann. Die ringförmig um eine konzentrische mittlere Durchtrittsöffnung des Montagestutzens stehenden Klemmzungen sind entweder einstückig koaxial am Zwischenstutzen angeformt oder in einem separaten Klemmzungenkäfig gelagert, der dann seinerseits (verdrehsicher) am Zwischenstutzen angeordnet werden kann. Die Überwurf- oder Hutmutter bildet beim Aufschrauben auf den Zwischenstutzen durch einen sich verjüngenden Klemmbund, der vorzugsweise in Form einer konischen inneren Druckfläche ausgebildet ist, eine Art Stützlager, welches die Klemmzungen beim Anziehen der Hutmutter gleichmäßig in Richtung auf das eingeführte Kabel drückt, so daß dieses schließlich festgeklemmt wird. Innerhalb der Klemmzungen kann üblicherweise noch eine Dichtung angeordnet werden.

Die erwähnte Verdrehsicherung ist zwischen der Hutmutter einerseits und dem Zwischenstutzen bzw. den an ihm einstückig angeordneten Klemmzungen wirksam und macht sich als ratschenartiger Eingriff zwischen den auf einen kleineren Durchmesser gepreßten und sich dabei allmählich immer stärker fächerartig überlappenden Klemmzungen und einer zusätzlichen Schrägverzahnung im Inneren der Hutmutter bemerkbar.

Bei dieser bekannten Kabelverschraubung könnte als problematisch angesehen werden, daß schon zu einem relativ frühen Zeitpunkt beim Zudrehen der Hutmutter für die Bedienungsperson eine fühlbare Gegenkraft wirksam wird, die sich dadurch ergibt, daß die Hutmutter mit ihrem Wirkbund die Klemmzungen auf einen immer kleineren Durchmesser pressen muß, wobei diese sich aufgrund einer schrägen Segmentierung fächerartig überlappen (DE-AS 26 31 996). Dies bedeutet nicht notwendigerweise, daß sich durch diese Einwirkung auch schon eine sichere Klemm- oder Abdichtwirkung auf das eingeführte Kabel ergeben hat, was man eigentlich nur dadurch kontrollieren kann, daß man durch Ziehen am Kabel die jeweils erzielte Einspannwirkung überprüft. Hier ist auch die Verdrehsicherung zwischen Hutmutter und Zwischenstutzen keine Hilfe, denn diese Verdrehsicherung wirkt nur zwischen den beiden genannten Elementen, ist also keine Verdrehsicherung für das durchgeführte Kabel selbst, und tritt im übrigen auch schon bei einem sehr frühen Stadium der Hutmutterdrehung auf, so daß die Bedienungsperson sich hierdurch unter Umständen sogar über die jeweils erzielte Klemmwirkung im Irrtum befinden kann, wenn diese nämlich davon ausgeht, daß das Ansprechen der Verdrehsicherung gleichzeitig auch schon eine wirksame Klemmverbindung zwischen Kabel einerseits und der Kabelverschraubung andererseits sicherstellt.

Bei diesen bekannten, ein eingeführtes Kabel mittels eines Klemmzungen-Preßrunds festspannenden Kabelverschraubungen ergibt sich aber noch ein weiteres Problem, das mit der Alterung der ein eingespanntes Kabel sichernden Kabelverschraubung zusammenhängt. Diese Kabelverschraubungen wirken, wie die bisherigen Ausführungen ergeben haben, kraftschlüssig auf das eingeführte Kabel ein. Hierbei entwickelt das Kabel, üblicherweise bestehend aus kunststoffüberzogenen Kupferdrähten, eingebettet in einem dickeren Kabelmantel, die Tendenz, langfristig dem einwirkenden Druck nachzugeben und durch das kunststoffeigene Fließvermögen sich der Form des Klemmzungen-Preßrunds anzupassen, so daß über die Jahre im schlimmsten Fall das Kabel sogar locker werden kann.

Auf jeden Fall kann sich schon nach kürzerer Einspanndauer der kraftschlüssige Verbund zwischen dem Kabel und den Klemmzungen soweit entspannen, daß das Kabel, beispielsweise bei äußerer Einwirkung, verdreht werden kann. Zwar sichert die Kabelverschraubung dann immer noch die axiale Position des Kabels wegen der radialen Rillenbildung im Kabelmantel - eine Verdrehung könnte aber dazu führen, daß im Inneren des Geräts die elektrischen Anschlüsse freikommen, was besonders große Nachteile bewirkt.

Eine ähnliche Verdrehsicherung, die auch in vergleichbarer Weise wirkt, ist ferner bekannt aus der DE-PS 39 03 354, wobei die im Inneren der Überwurfmutter wirksame Verzahnung als Rastzahn bezeichnet ist, der eine Sperrflanke zum Einrasten zwischen zwei durch im Querschnitt schräge Axialschlitze voneinander getrennte Klemmfinger aufweist und wobei diese Sperrflanke schräg zu einem in ihrem Bereich verlaufenden und sie somit schneidenden Radius der Durchstecköffnung angeordnet ist und ferner in Gebrauchsstellung zur gleichen Dreh- oder Umfangsrichtung hin wie die Axialschlitze der Schraubhülse schräg verläuft.

Allerdings nicht nur aus dieser Patentschrift 39 03 354, deren nebengeordneter Unteranspruch 2, sondern auch aus einer vieltausendfachen offenkundigen Vorbenutzung mindestens ab 1977 der aus der DE-PS 26 31 996 bekannten Verschraubung ist es ferner bekannt, im Inneren der Überwurfmutter anstelle oder ergänzend zum Rastzahn auch Rastrillen anzuordnen, die dann jeweils eine nach innen gerichtete Sperrflanke zum Einrasten eines der Klemmfinger oder Klemmzungen aufweist. Bei der erwähnten, dem sich mit solchen Kabelverschraubungen beschäftigenden Fachmann umfassend bekannten Vorbenutzung waren jeweils einander diametral gegenüberliegend zwei Erhebungen oder Rastzähne und um 90° gegenüber versetzt und einander wiederum gegenüberliegend Rastrillen angeordnet, wobei dann die sich fächerartig überlappenden Klemmzungen bei gleichläufiger Schrägschlitzung untereinander entweder mit den Rastzähnen eine Ratschenverbindung aufnahmen oder aus dem Klemmzungenbund in die Rastrillen einfielen.

Der Erfindung liegt die Aufgabe zugrunde, bei einer sich durch eine gegenläufige Schrägschlitzung einzelner Klemmzungen im Klemmzungenrund auszeichnenden Kabelverschraubung eine Möglichkeit zur Bildung einer Verdrehsicherung zwischen der Hut- oder Überwurfmutter und dem Montagestutzen vorzusehen.

### Vorteile der Erfindung

Die Erfindung löst die genannte Aufgabe mit den kennzeichnenden Merkmalen des Anspruchs 1 und hat den Vorteil, daß auch bei durch die gegenläufige Schrägschlitzung unterschiedlich im Klemmzungen-Ringverbund stehenden einzelnen Klemmzungen eine sichere Verdrehsicherung zwischen der Hutmutter einerseits und dem Montagestutzen mit seinen Klemmzungen andererseits möglich ist, die sich erst dann automatisch durch einen ratschenartigen Eingriff bemerkbar macht, wenn die Hutmutter stärker angezogen wird.

Durch die in den Unteransprüchen aufgeführten Maßnahmen sind weitere vorteilhafte Ausgestaltungen und Verbesserungen der Erfindung möglich.

So ist es in einer ersten Ausgestaltung vorteilhaft, daß durch die Anordnung von Rastnasen an den Rückseiten lediglich der Klemmzungen, die durch die zunehmende Druckwirkung der Hutmutter ohnehin nach außen und daher in enge Wirkverbindung mit dem Hutmutter-Innendruckkonus gedrückt werden, die Verrastungswirkung automatisch verstärkt wird und man nicht auf den Zufall der fächerartig sich überlappenden bekannten Klemmzungenanordnung angewiesen ist, bei der eine oder mehrere Klemmzungen aus dem Verbund ausbrechen müssen, um in eine Rille zu gelangen, oder, bei einer nach außen stehenden Zahnung, effektiv dann nach innen aus dem Klemmzungenrund weggedrückt werden müssen.

Da bei einer alternierenden Anordnung von jeweils nach innen und nach außen drückenden Zungen jede zweite Zunge als Druckzunge mit einer Rastnase auf ihrer Rückseite versehen ist, ist dafür gesorgt, daß auch bei nur wenigen oder auch nur einer Aufnahmerille im Bereich der Hutmutterdruckfläche oder dem Hutmutterdruckkonus pro Winkelverdreheinheit eine Vielzahl von Rastmöglichkeiten gegeben sind, die einen festen und sicheren Eingriff ermöglichen.

Vorteilhaft ist ferner, daß es nicht erforderlich ist, die Rastrillen in der Hutmutter-Druckfläche in besonderer Weise einzuarbeiten oder schrägzustellen, was aufwendig ist, sondern einfache, geradlinig verlaufende Ausnehmungen sind völlig hinreichend, damit die Rastzähne an den nach außen stehen bleibenden Zungen, die im folgenden auch als Druckzungen bezeichnet werden, wirksam werden können.

Die Klemmzungen allgemein, also alle Zungen, sind mit Vorteil einstückig am Montagestutzen angeformt, bilden also durch die jeweils gewünschte gegenläufige Schrägschlitzung bis zur alternierenden Klemmzungengestaltung in die üblicherweise konische Druckfläche der Hutmutter hineinragende fingerartige Erstreckungen mit großer Toleranz für den Durchmesser jeweils einzuspannender Kabel oder Schläuche.

Bei der zweiten Ausführungsform ist vorteilhaft, daß an dem die Klemmzungen tragenden Montagestutzen keine Änderungen erforderlich sind und auch am inneren Wirkbund, also an der üblicherweise konisch verlaufenden inneren Druckringfläche der Hut- oder Überwurfmutter keine Änderungen notwendig werden.

Durch die Verlagerung der Verrastungsmittel in den Bereich der Hutmutter-Bohrung, indem nämlich dort im Übergang von der konischen Druckfläche ein innerer zylindrischer Ringbund mit vorgegebener Höhenerstrekkung so ausgebildet wird, daß dieser Ringbund eine Rasterung aufweist, die sich entweder nur teilweise am unteren inneren Rand oder über seine gesamte Höhe verlaufend erstreckt, wird das ratschenartige Ansprechen der Verdrehsicherung erst bei stärkerem Anziehen aktiviert.

Es ist diese Rasterung von zunächst beliebiger Form und Ausbildung, die direkt mit den Klemmzungen beim Aufschrauben der Hutmutter in eine Wirkverbindung tritt, die dann zur Verdrehsicherung wird.

Hier ist ferner vorteilhaft, daß beim anfänglichen Aufschrauben die Verdrehsicherung nicht wirksam ist, da sowohl der Klemmzungenringbund als auch die auf ihn einwirkende Hutmutterdruckfläche im glatten Übergang ausgebildet sind, so daß sich ein leichtes Aufschrauben bis zu dem Moment ergibt, zu welchem bei der hier ins Auge gefaßten speziellen Ausbildung der Klemmzungen in beispielsweise alternierender Ausbildung als Druck- und echte Klemm-Zungen die nach außen wegstehenden Druckzungen bis isn den Übergangsbereich der konischen Druckfläche zum zylindrischen Ringbund an der Hutmutter gelangen. Erst in diesem Moment beginnt die zur Verdrehsicherung führende bzw. diese gewährleistende Rasteinwirkung zwischen den außen bleibenden Druckzungen und der Rasterung im zylindrischen Ringbund der Hutmutter, zu welchem Zeitpunkt dann auch die eigentlichen Klemmzungen unter der Wirkung der Druckzungen zur eckigen bzw. unrunden Einspannung des Kabels, gegebenenfalls unter Zwischenlegung einer Dichtung, auf das Kabel stark einwirken und dieses einspannen.

Dabei bildet der Ringbund selbst durch seine größere Höhe eine Verstärkung des Hutmutteraufbaus insgesamt, insbesondere im Druckflächenbereich.

Vorteilhaft ist auch die Ausbildung der Rasterung im zylindrischen Ringbund der Hutmutter wellenförmig oder sägezahnförmig ohne Unterbrechung, so daß sich eine Vielzahl von Verrastungsmöglichkeiten bei jeder kleineren Winkelverdrehung ergibt.

### Zeichnung

Ausführungsbeispiele der Erfindung sind in der Zeichnung dargestellt und werden in der nachfolgenden Beschreibung näher erläutert. Es zeigen:
- Fig. 1: in einer Vorderansicht den Montagestutzen mit einstückig angeformten Klemmzungen;
- Fig. 2: eine Draufsicht auf den Montagestutzen von oben;
- Fig. 3: eine Ansicht der Hutmutter von unten und
- Fig. 4: eine Vorderansicht der Hutmutter mit Halbschnitt - sämtliche Figuren 1-4 stellen eine erste Ausführungsform der Erfindung dar, während
- Fig. 5: in Vorderansicht den Montagestutzen der Kabelverschraubung mit mittlerem Sechskantbund und oben vorzugsweise einstückig angesetzten Zungen eines zweiten Ausführungsbeispiels zeigt, und
- Fig. 6: in einer Ansicht von oben den Montagestutzen;
- Fig. 7: die Hutmutter in einer Ansicht von unten und
- Fig. 8: die gleiche Hutmutter in einer Vorderansicht mit Halbschnitt, während die
- Fig. 9: nochmals den Montagestutzen in einer der Fig. 6 entsprechenden Darstellung zeigt, jedoch mit unter der Wirkung des Hutmutterdrucks nach innen geklappten Klemmzungen, wobei die Hutmutter zur Klarstellung weggenommen ist; schließlich zeigt die
- Fig.10: im Teilausschnitt perspektivisch eine weitere mögliche Ausführungsform der inneren Rasterung im oberen zylindrischen Ringbundbereich der Hutmutter - die Figuren 5-10 beziehen sich sämtlich auf das zweite Ausführungsbeispiel.

### Beschreibung der Ausführungsbeispiele

Der Grundgedanke vorliegender Erfindung besteht darin, vorzugsweise bei alternierend sich abwechselnden, nach innen wirkenden Klemmzungen und von der Hutmutter unmittelbar beaufschlagten äußeren Druckzungen lediglich deren Rückflächen in eine eine Verriegelungs-Rastposition gewährleistende Wirkverbindung zu bringen, die bei Anziehen der Hutmutter anspricht und eine Verdrehsicherung zwischen der Hutmutter und dem Montagestutzen bildet.

Dabei können auf den Druckzungen-Rückflächen, die auf den (konischen) Druckflächenrund der Hutmutter gerichtet sind, Rastnasen angeordnet sein, die mit für sich gesehen bekannten Rillenformen im Hutmutterinneren zur Bildung einer Verdrehsicherung zusammenwirken oder man ordnet mindestens im Übergangsbereich zwischen der konischen, glatt gelassenen Druckfläche der Hutmutter und einem sich daran nach oben anschließenden zylindrischen inneren Ringbund, der insofern die Hutmuttermittenbohrung bildet, eine Rasterung an, die, ohne daß es irgendeiner Änderung an der beliebigen Form des Montagestutzens mit seinen Klemmzungen bedarf, eine wirksame Verdrehsicherung mit diesen beim Anziehen der Hutmutter eingeht.

Bei beiden Ausführungsformen ist der Klemmzungenringbund so ausgebildet, daß, wie aus den weiter vorn genannten Druckschriften (DE-PS 34 18 978) hinreichend bekannt, mindestens eine, vorzugsweise aber mehrere im Ringbund stehende Klemmzungen durch eine beidseitige Schrägschlitzung von anderen Klemmzungen getrennt sind, so daß bestimmte Zungen, die im folgenden als Druckzungen bezeichnet werden, außen (zunächst) beim Anziehen der Hutmutter stehen bleiben und mit deren ringförmiger konischer Gegendruckfläche in Wirkverbindung treten, während innere echte Klemmzungen durch die Wirkung beidseitiger Druckzungen nach innen gedrückt werden.

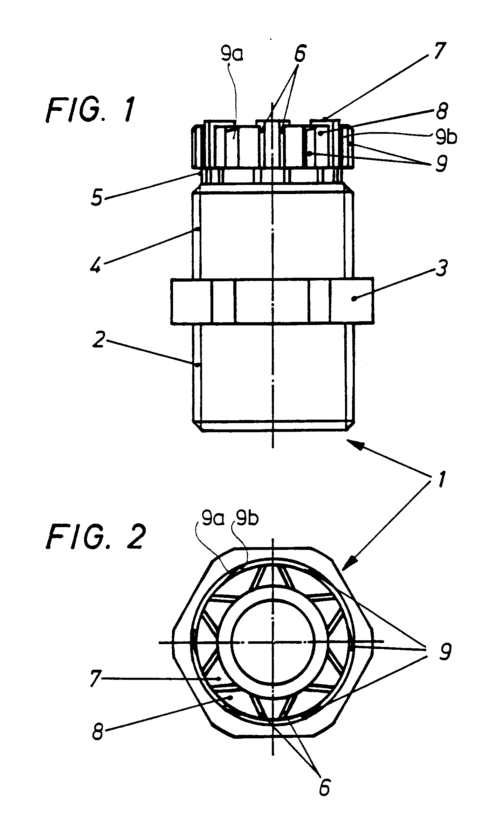

In Fig. 1 verfügt der Montagestutzen 1, getrennt durch einen etwa mittig angeordneten Sechskantbund 3 über ein unteres Anschlußgewinde 2 und ein oberes Aufnahmegewinde 4 für die Hutmutter.

Der Übergang zu den vorzugsweise einstückig am Montagestutzen 1 angeordneten Klemm- und Druckzungen erfolgt über einen Ringbund 5; die Klemm- und Druckzungen bilden einen Klemmzungenring und sind in für sich gesehen bekannter Weise so ausgebildet, daß mindestens eine der Klemmzungen von den anderen Klemmzungen durch eine gegenläufige Schrägschlitzung 6 getrennt ist, so daß sich bei dieser Klemmzunge untereinander jeweils Keilwirkungen ergeben so, wie dies ausführlich in der schon erwähnten DE-PS 34 18 978 auch für eine symmetrische Anordnung jeweils unterschiedlicher Klemm- und Druckzungen im Klemmzungenring erläutert ist. Das dargestellte Ausführungsbeispiel ist darauf gerichtet, jedoch nicht in diesem Sinne beschränkt, daß in Ausnutzung der durch die DE-PS 34 18 978 gegebenen Möglichkeit, in symmetrischer Verteilung auch eine größere Anzahl von Klemmzungen zu nach innen bewegbaren echten Klemmzungen zu machen, so daß dann alternierend jede zweite Zunge eine Druckzunge 8 ist, während die nach innen wandernden Klemmzungen mit dem Bezugszeichen 7 versehen sind.

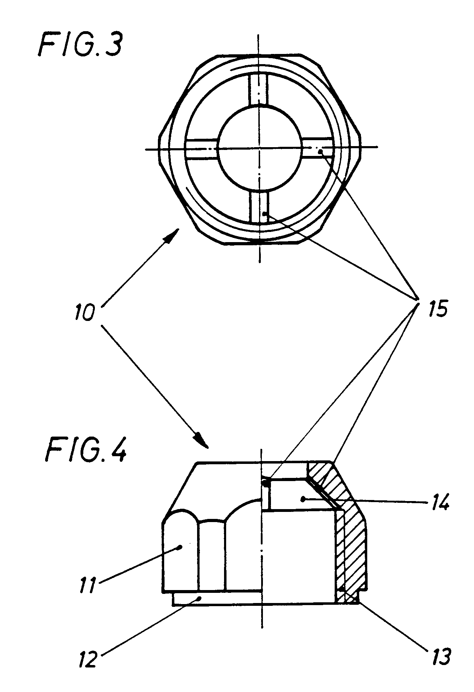

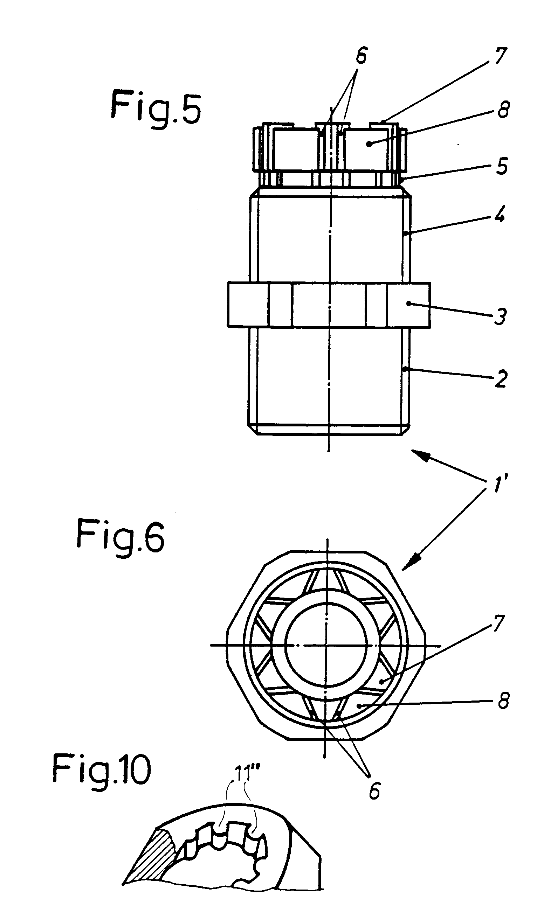

Es sind die Druckzungen 8, die durch ihr Zusammenwirken mit dem bei Anziehen der in den Figuren 3 und 4 dargestellten Hutmutter wirksam werdenden inneren Hutmutter-Wirkbund oder deren innerer konischer Druckringfläche, diesen Druck aufnehmen und auf die Klemmzungen 7 übertragen, die hierdurch stärker nach innen wandern und insgesamt mit Bezug auf das einzuklemmende Kabel eine eckige bzw. jedenfalls unrunde Konfiguration bilden.

Mindestens eine der Rückseiten, also der breiten Querschnittsflächen der Druckzungen 8 trägt dann eine Rastnase 9, wobei bei dem dargestellten Ausführungsbeispiel bevorzugt sämtliche Druckzungen rückwärtig mit Rastnasen 9 versehen sind.

Diese Rastnasen können so ausgebildet sein, wie in der Draufsicht der Fig. 2 am besten zu erkennen, daß nämlich in der Verschraubungsrichtung beim Anziehen der Hutmutter eine länger im spitzen Winkel nach außen ansteigende Fläche 9a gebildet ist, die anschließend in eine abrupt nach innen abfallende Steilfläche 9b übergeht.

Da diese Rastnasen 9 mit an sich beliebig gestaltbaren Hutmutterrillen 15 zusammenwirken, wie in den Figuren 3 und 4 gezeigt, ist sichergestellt, daß in der Aufschraub-Festziehrichtung durch eine solchermaßen gebildete Verdrehsicherung kein Hemmnis auftritt, während ein Zurückdrehen praktisch unmöglich ist, da dann die steile Querfläche 9b an eine mit Vorzug entsprechend ausgebildete Innenfläche jeder Hutmutterrille 15 anschlägt, so daß sich eine Verrastung gegen unwillkürliches Aufdrehen bildet.

Es versteht sich, daß mit Vorteil die erwähnten Flächen aber so ausgebildet sind, daß bei gewünschtem Aufdrehen und entsprechender Kraftanwendung eine solche Verdrehsicherung überwunden werden kann.

Dabei ist, wie in den Figuren 3 und 4 gezeigt, die Hutmutter 10 im Bereich ihrer inneren konischen Druckfläche 14 mit beispielsweise vier Hutmutterrillen 15 ausgestattet, die beim Aufschrauben der Hutmutter 10 abwechselnd mit den dort vorhandenen sechs Rastnasen aufeinanderfolgend in Wirkverbindung treten, so daß in kürzesten Winkelabständen beim Aufschrauben jeweils eine Rastwirkung auftritt.

Der Aufbau der in den Figuren 3 und 4 gezeigten Hutmutter vervollständigt sich durch einen äußeren Montagesechskant 11 und einen unteren Ringbund 12 sowie das innere Aufnahmegewinde 13.

Der beim zweiten Ausführungsbeispiel in den Figuren 5 und 6 dargestellte Montagestutzen 1′ umfaßt ebenfalls einen zylindrischen Grundkörper, der mittig einen Sechskantbund 3 aufweist, mit einem darunter angeordneten Anschlußgewinde 2 und einem sich oberhalb des Sechskantbundes 3 befindenden Aufnahmegewinde 4 für die Hutmutter. Im einstückigen Übergang schließt sich nach oben der Klemmzungenring an, mit einer Ringnut 5 zwischen den hierdurch beweglicher ausgebildeten Klemmzungen und dem Montagestutzen-Hauptkörper.

Es wird auch hier zwischen den im Klemmzungenringbund stehenden Zungen unterschieden zwischen äußeren Druckzungen 8 und inneren echten Klemmzungen 7, wobei die inneren Klemmzungen 7 auch eine größere axiale Höhe aufweisen können. Die jeweils gegenläufige Schlitzung ist in den Figuren 5 und 6 durch das Bezugszeichen 6 gekennzeichnet; auch das in diesen Figuren dargestellte bevorzugte Ausführungsbeispiel weist die alternierenden Druck- und Klemmzungen auf entsprechend der in dem deutschen Patent 34 18 978 gebotenen Möglichkeit, eine beliebige Anzahl, jedoch mindestens eine der Klemmzungen als echte und insofern selektive, nach innen gedrückte Klemmzunge auszubilden.

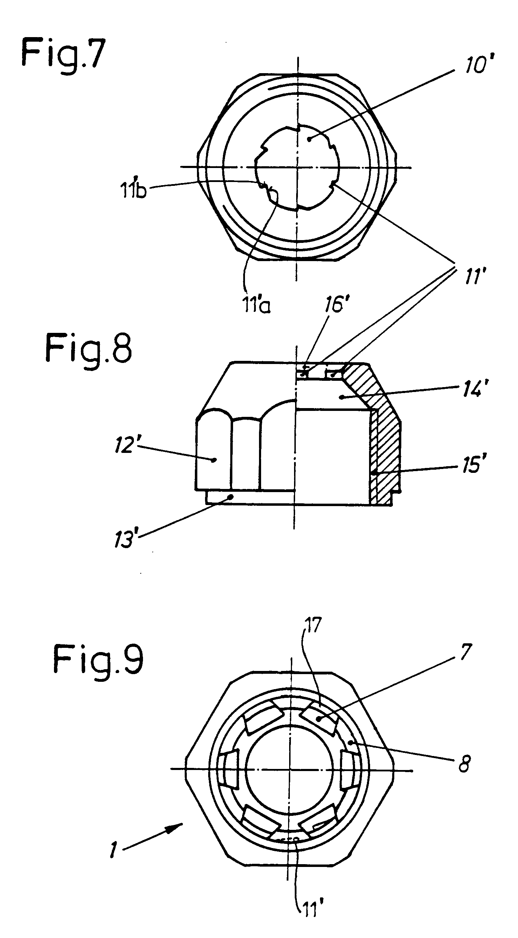

Betrachtet man die in den Figuren 7 und 8 dargestellte Hutmutter 10′, die auch als Überwurfmutter bezeichnet werden kann, dann weist diese zunächst den Montagesechskantbund 12′ auf, der nach unten in eine abgesetzte Ringschulter 13′ übergeht und innen ein Aufnahmegewinde 15′ aufweist, mit welchem die Hutmutter auf das Aufnahmegewinde 4 des Montagestutzens 1 geschraubt wird. Nach oben schließt sich dann im Inneren der Hutmutter dessen Wirk- oder Druckbund an, der bei dem dargestellten Ausführungsbeispiel gebildet ist von einer konischen Ringdruckfläche 14′, die dann ihrerseits wieder weiter nach oben in einen bevorzugt zylindrisch verlaufenden inneren Ringbund 16′ übergeht, der eine vorgegebene Höhe aufweist.

Es ist dieser Übergangs- oder Ringbund 16′, der eine solche Ausbildung erfährt, daß sich eine sichere Verdrehsicherung zwischen Hutmutter und Montagestutzen ergibt, indem, zunächst allgemein ausgedrückt, mindestens im Übergangsbereich zwischen der konischen Druckringfläche 14′ der Hutmutter und dem zylindrischen Ringbund 16′ eine Rasterung 11′ angeordnet ist, die von grundsätzlich beliebiger Form sein kann. In der Darstellung der Fig. 7, in welcher man in die Hutmutter von unten hinein schaut, sieht mans, daß diese Rasterung eine sich wiederholende Zahnform bildet, mit einer allmählich im spitzen Winkel ansteigenden Vorderfläche 11′a, die in Drehrichtung der Hutmutter zuerst auf die außen stehenden Druckzungen 8 aufläuft, und einer sich in Drehrichtung daran anschließenden, abrupt abfallenden Rastfläche 11′b, die jedenfalls ein ungewolltes Rückdrehen der Hutmutter sicher verhindert, indem diese Rastfläche 11′b auf eine jeweils zugeordnete Randkante im Außenring verbliebener Druckzungen auflaufen würde.

Bei der Draufsicht der Fig. 9 ist darauf hinzuweisen, daß die nach innen geklappten echten Klemmzungen 7 zur Druckfläche 14′ und zur inneren Ringbundfläche und damit auch zu der dortigen Rasterung einen Abstand 17 aufweisen, also an der Verrastung nur im nicht nach innen eingeklappten Zustand teilnehmen würden bzw. können, während es tatsächlich die Klemmzungen 8 sind, auf die die Rasterungs-Zähne im zylindrischen Hutmutter-Ringbund 16′ auflaufen und diese beim Vorbeilauf auch ratschenartig jeweils nach innen eindrücken und dann wieder nach außen zurückschnellen lassen. Nur zum besseren Verständnis ist daher in Fig. 9 noch punktiert einer der Rastzähne 11′ des zylindrischen Hutmutter-Ringbunds angedeutet, so, wie er sich bei aufgesetzter Hutmutter ergeben würde und mit den Druckzungen 8 in Wirkverbindung treten kann.

Dabei ist es möglich, daß entsprechend der Darstellung der Fig. 8 die Rasterung nur in einem unteren Halbteil, aber mindestens im Übergangsbereich zwischen Druckfläche 14′ und Ringbund 16′ angeordnet ist oder sie kann auch bis nach oben durchlaufend vorhanden sein, wenn dies beispielsweise beim Spritzvorgang Vorteile bietet. Der obere Teil einer solchen Rasterung wird allerdings auch bei starkem Anziehen nicht an der Verrastungs-Verdrehsicherung mit den Klemmzungen teilnehmen können, da diese durch die konische Druckfläche verstärkt nach innen gedrückt werden.

Eine alternative Ausführungsform einer Rasterung für den Ringbund in der Hutmutterbohrung läßt sich noch der Darstellung der Fig. 10 entnehmen; die dort dargestellte Rasterung 11˝ besteht aus sich wiederholenden Ausbeulungen oder Vorsprüngen, die wellenförmig aufeinander folgen und ebenfalls eine gute Verrastung mit den jeweils an ihnen entlang ratschenden Klemmzungen ermöglichen und sich dabei über die ganze Höhe des Ringbereiches erstrecken.

## Patentansprüche

1. Verschraubung aus Kunststoff zur Ein- und Durchführung, Halterung, Abdichtung und Zugentlastung von Kabeln, Leitungen oder Schläuchen (Kabelverschraubung), bestehend aus Montagestutzen (1) mit Hutmutter (10,10′), wobei am hohlzylindrischen Montagestutzen (1) Klemmzungen (7) koaxial einstückig angeordnet oder diesem zugeordnet sind, welche bei Drehung der Hutmutter (10,10′) gegen das eingeführte Kabel gepreßt werden und wobei mindestens eine der Klemmzungen (7), vorzugsweise abwechselnd jede zweite - jeweils alternierend -, durch gegenläufige Schrägschlitzung (6) so angeordnet ist (sind), daß jeweils nach innen oder außen gerichtete breitere Querschnittseiten an den Klemmzungen (7) gebildet sind, so daß ein Klemmzungenbund aus inneren echten, das Kabel o. dgl. einspannenden Klemmzungen und aus äußeren, auf die inneren Klemmzungen einen nach innen gerichteten Druck ausübenden Druckzungen (8) gebildet ist, dadurch gekennzeichnet, daß die nach außen gerichteten Rückflächen lediglich der äußeren Druckzungen (8) mindestens indirekt mit einer inneren Hutmutter-Rasterform (15; 11′, 11˝) beim Anziehen der Hutmutter (10, 10′) in eine eine Verdrehsicherung bildende Verriegelungs-Rastposition übergehen.

2. Verschraubung nach Anspruch 1, dadurch gekennzeichnet, daß auf den außen liegenden, breiteren Rückseiten der Druckzungen (8) Rastnasen (9) angeordnet sind, die in Rillen (15) im Inneren der Hutmutter-Druckfläche (14) unter Bildung einer Verdrehsicherung einfallen.

3. Verschraubung nach Anspruch 1, dadurch gekennzeichnet, daß die Hutmutter (10′) oberhalb ihrer Druckfläche (14′) einen Ringbund (16′) aufweist, der eine nach innen gerichtete Rasterung (11′; 11′a, 11′b; 11˝) aufweist, die mit den außen stehen bleibenden Druckzungen (8) des Klemmzungenbundes beim Anziehen der Hutmutter (10′) in die Verriegelungs-Rastposition übergehen.

4. Verschraubung nach Anspruch 1, dadurch gekennzeichnet, daß die Zungen des Klemmzungenbundes alternierend gegenläufige Schrägschlitzungen aufweisen derart, daß abwechselnd eine innere Klemmzunge (7) einer äußeren Druckzunge (8) folgt.

5. Verschraubung nach Anspruch 2, dadurch gekennzeichnet, daß sich im Klemmzungenrund alternierend Klemmzungen (7) und Druckzungen (8) abwechseln und die auf den Rückseiten der Druckzungen (8) angeordneten Rastnasen (9) über deren Höhe axial verlaufend angeordnet sind.

6. Verschraubung nach Anspruch 2 oder 5, dadurch gekennzeichnet, daß die Rastnasen (9) in der Aufschraub-Festspannrichtung der Hutmutter (10) eine allmählich im spitzen Winkel ansteigende erste Fläche (9a) und eine sich an dieser anschließende, abrupt nach innen abfallende Arretierfläche (9b) bilden, mit einem entsprechenden Verlauf der Ausformung der Hutmutterrillen (15) im Inneren der konusförmigen Hutmutterdruckfläche (14).

7. Verschraubung nach Anspruch 3, dadurch gekennzeichnet, daß die Rasterung (11′) von einer aufeinanderfolgenden Zahnung gebildet ist, wobei die einzelnen Zähne jeweils eine sanft im spitzen Winkel ansteigende Auflauffläche (11′a) und eine abrupt abfallende Arretierfläche (11′b) aufweisen.

8. Verschraubung nach Anspruch 3, dadurch gekennzeichnet, daß die Rasterung einen wellenförmigen Verlauf aufweist mit nach innen gerichteten Ausbauchungen (11˝) und dazwischenliegenden Tälern.

9. Verschraubung nach Anspruch 7 oder 8, dadurch gekennzeichnet, daß die Rasterung (11′, 11˝) sich lediglich bis zu einer Teilhöhe des zylindrisch ausgebildeten Ringbunds (16′) im Übergang von der konischen Ringdruckfläche (14′) der Hutmutter (10) erstreckt.

## Claims

1. A screw connection made of plastics material for the introduction and guidance, securing, sealing and tension-release of cables, conduits or hoses (cable screw connection), comprising an assembly socket (1) with a cap nut (10, 10′), clamping tongues (7) being coaxially arranged on the hollow-cylindrical assembly socket (1) and being integrally formed or associated with said assembly socket (1), which clamping tongues (7) are pressed against the inserted cable when the cap nut (10, 10′) is rotated, and at least one of the clamping tongues (7), preferably every alternate clamping tongue, being arranged by oppositely directed inclined slits (6) in such a manner that inwardly or outwardly broader cross sectional sides are formed on the clamping tongues (7), so that a clamping tongue collar is formed from inner, real clamping tongues clamping the cable or the like and outer pressure tongues (8) exerting an inwardly directed pressure on the inner clamping tongues, characterised in that the outwardly directed rear surfaces of the outer pressure tongues (8) alone travel at least indirectly with an inner cap nut locking mechanism (15; 11′, 11˝) into a locking position forming a rotational lock when the cap nut (10, 10′) is tightened.

2. A screw connection according to claim 1, characterised in that locking noses (9) are arranged on the outer, broader rear sides of the pressure tongues (8), which locking noses engage in grooves (15) inside the cap nut pressure surface (14) to form a rotational lock.

3. A screw connection according to claim 1, characterised in that the cap nut (10′) comprises an annular collar (16′) above its pressure surface (14′), which annular collar comprises inwardly directed locking elements (11′, 11′a, 11′b, 11˝), which enter into the locking position with the stationary pressure tongues (8) on the outside of the clamping tongue collar when the cap nut (10′) is tightened.

4. A screw connection according to claim 1, characterised in that the tongues of the clamping tongue collar comprise alternate oppositely directed inclined slits, so that inner clamping tongues (7) alternate with outer pressure tongues (8).

5. A screw connection according to claim 2, characterised in that clamping tongues (7) and pressure tongues (8) alternate in the clamping tongue collar and the locking noses (9) arranged on the rear sides of the pressure tongues (8) extend axially over the height of the pressure tongues (8).

6. A screw connection according to claim 2 or 5, characterised in that, in the tightening/locking direction of the cap nut (10), the locking noses (9) form a first surface (9a), which slopes gently upwards at an acute angle and a stop surface (9b), which adjoins the first surface (9a) and slopes abruptly downwards and inwards, with a corresponding shaping of the cap nut grooves (15) inside the conical cap nut pressure surface (14).

7. A screw connection according to claim 3, characterised in that the locking mechanism (11′) is formed by successive toothing, the individual teeth each comprising a ramp surface (11′a) sloping gently upwards at an acute angle and a stop surface (11′b) sloping abruptly downwards.

8. A screw connection according to claim 3, characterised in that the locking mechanism has a corrugated form with inwardly directed bulges (11˝) and intermediate valleys.

9. A screw connection according to claim 7 or 8, characterised in that the locking mechanism (11′, 11˝) merely extends over part of the height of the cylindrical annular collar (16′) in the transition area from the conical annular pressure surface (14′) of the cap nut (10).

## Revendications

1. Vissage en matière plastique servant à introduire et faire passer, maintenir, rendre étanche et détendre des câbles, des canalisations ou des tuyaux (fixation de câble vissée), consistant en ajustages de montage (1) avec écrou borgne (10, 10′), des languettes de serrage (7) étant disposées sur l'ajustage de montage (1) cylindrique creux de façon coaxiale d'une seule pièce ou étant associées à celui-ci, languettes qui lorsqu'on fait tourner l'écrou borgne (10, 10′) contre le câble introduit sont comprimées et au moins l'une des languettes de serrage (7), de préférence alternativement une languette sur deux - respectivement en alternant - étant disposée au moyen d'un rainurage oblique (6) opposé de telle sorte que chaque fois les plus larges sections latérales dirigées vers l'intérieur ou l'extérieur forment les languettes de serrage (7) si bien qu'un collet des languettes de serrage est formé à partir de vraies languettes intérieures de serrage, serrant le câble ou analogue et à partir de languettes de pression extérieures (8) exerçant sur les languettes intérieures de serrage une pression dirigée vers l'intérieur, vissage en matière plastique caractérisé en ce que les faces arrière dirigées vers l'extérieur uniquement des languettes de pression extérieures (8) passent du moins indirectement avec des encoches d'encliquetage (15 ; 11′, 11‴) lors du vissage de l'écrou borgne (10, 10′) dans une position d'encliquetage et de verrouillage assurant un blocage en rotation.

2. Vissage selon la revendication 1, caractérisé en ce que l'on dispose des nez d'encliquetage (9) sur les faces arrière situées à l'extérieur, plus larges des languettes de pression (8), nez qui s'engagent dans des rainures (15) à l'intérieur de la surface de pression (14) de l'écrou borgne en assurant un blocage en rotation.

3. Vissage selon la revendication 1, caractérisé en ce que l'écrou borgne (10′) présente au-dessus de sa surface de pression (14′) un collet annulaire (16′), qui présente un encliquetage orienté vers l'intérieur (11′, 11′a, 11′b, 11˝), qui passe avec les languettes de protection (8) restant immobiles à l'extérieur, du collet de languettes de serrage lors du vissage de l'écrou borgne (10′) dans la position d'encliquetage et de verrouillage.

4. Vissage selon la revendication 1, caractérisé en ce que les languettes du collet des languettes de serrage présentent de façon alternative des rainures obliques opposées de telle sorte que de façon alternative une languette intérieure de serrage (7) fait suite à une languette de pression extérieure (8).

5. Vissage selon la revendication 2, caractérisé en ce que des languettes de serrage (7) et des languettes de pression (8) alternent dans l'arrondi des languettes de serrage et les nez d'encliquetage (9) disposés sur les faces arrière des languettes de pression (8) sont disposés en s'étendant axialement en hauteur.

6. Vissage selon la revendication 2 ou 5, caractérisé en ce que les nez d'encliquetage (9) dans le dispositif de blocage par vissage de l'écrou borgne (10) forment une première face (9a) montant peu à peu sous un angle aigu et une face 9b de blocage se raccordant de la précédente, tombant de façon abrupte vers l'intérieur, avec un tracé correspondant de la saillie des rainures de l'écrou borgne (15) à l'intérieur de la face de pression (14) de l'écrou borgne en forme de cône.

7. Vissage selon la revendication 3, caractérisé en ce que l'encliquetage (11′) est constitué par des dentures consécutives, les différentes dents présentant respectivement une surface (11′a) montant doucement sous un angle aigu et une surface de blocage (11′b) tombant de façon abrupte.

8. Vissage selon la revendication 3, caractérisé en ce que l'encliquetage présente un tracé en forme d'ondulations avec des bossages dirigés vers l'intérieur (11˝) et des creux situés entre eux.

9. Vissage selon la revendication 7 ou 8, caractérisé en ce que l'encliquetage (11′, 11˝) s'étend uniquement jusqu'à une hauteur partielle du collet annulaire (16′) constitué de façon cylindrique dans le passage de la face arrière conique (14′) annulaire de l'écrou borgne (10).
